# EUROPEAN PATENT APPLICATION

(11) **EP 4 643 627 A1**
(43) Date of publication of application: **05.11.2025**
(21) Application number: 22970065.3
(22) Date of filing: 27.12.2022
(51) Int. Cl.: A01C 7/06

(54) **WORKING AIRVEHICLE, WORKING AIRVEHICLE GROUP, AND WORKING METHOD**

(71) Applicant: Kubota Corporation, Osaka 556-8601 (JP)
(72) Inventor: ISHIKAWA Naohiro, Sakai-shi, Osaka 590-0908 (JP)
(74) Representative: Cabinet Beau de Loménie
(86) International application number: PCT/JP2022/048261
(87) International publication number: WO 2024/142272

(57) **Abstract**

A working aerial vehicle according to the present invention includes a work unit 2 configured to perform work for bringing a field into a state suitable for receiving supply of a supplied material; and a supply unit 3 configured to supply the supplied material to the field on which the work is performed.

## Description

### Technical Field

The present invention relates to a working aerial vehicle, a working aerial vehicle group, and a working method.

### Background Art

Aerial spraying is mentioned as one of methods that can improve the efficiency of seeding work and the like, and various techniques related to this have been proposed.

For example, PCT Japanese Translation Patent Publication No. JP2020-508925 (Patent Literature 1) discloses an aerial spraying method including a step of acquiring the wind speed of wind that causes drift dispersal of a sprayed material sprayed from an unmanned aerial vehicle (UAV), and a step of controlling one or a plurality of components of the UAV based on the acquired wind speed to at least reduce the drift dispersal.

Japanese Patent Application Laid-Open No. 2012-521989 (Patent Literature 2) discloses a composition including at least one coating including at least one seed and at least one wetting agent, as seed Suitable for aerial spraying.

Japanese Patent Application Laid-Open No. 2012-70681 (Patent Literature 3) discloses a vegetation bag for aerial seeding greening, which is aerially sprayed to capture flying seeds and green a greening target area, the vegetation bag including a vegetation base material and a bag body filled with the vegetation base material, in which a plan view shape of the vegetation bag is molded in an annular shape.

### Citation List

### Patent Literature

Patent Literature 1: PCT Japanese Translation Patent Publication No. 2020-508925(or International Publication No. 2018/157393)
Patent Literature 2: Japanese Patent Application Laid-Open No. 2012-521989 (or International Publication No. 2010/111309)
Patent Literature 3: Japanese Patent Application Laid-Open No. 2012-70681

### Summary of Invention

### Technical Problem

In the aerial spraying technique of the related art, since the sprayed seeds are exposed on the ground surface, the seeds may be taken away by birds, beasts, or the like, or may be moved by rain, wind, or the like. Thus, there were cases where the seeds could not be retained at an intended place. In addition, it was difficult to control the dispersion state of the seeds on the ground surface. On the other hand, a method of embedding seeds by ejecting the seeds toward the ground surface has also been proposed. However, in this case, the seeds may be damaged depending on the hardness of the soil, the output of the ejection, and the like.

In view of the above-described problems, it is required to bring a field into a state suitable for receiving supply of a supplied material and to supply the material to the field without damaging the material.

### Solution to Problem

A working aerial vehicle according to the present invention includes a work unit configured to perform work for bringing a field into a state suitable for receiving supply of a supplied material; and a supply unit configured to supply the supplied material to the field on which the work is performed.

The working aerial vehicle group according to the present invention includes a first working aerial vehicle including a work unit configured to perform work for bringing a field into a state suitable for receiving supply of a supplied material, and a second working aerial vehicle including a supply unit configured to supply the supplied material to the field on which the work is performed.

A working method according to the present invention includes a first step of performing, by a working aerial vehicle, work for bringing a field into a state suitable for receiving supply of a supplied material; and a second step of supplying, by a working aerial vehicle, the supplied material to the field on which the work is performed.

According to these configurations, after supplying the work material and bringing the field into a state suitable for receiving the supply of the supplied material, the supplied material is supplied to the field. Thus, the supplied material does not remain on the ground surface as it is. In addition, since the supplied material itself does not perform work on the field, the supplied material is less likely to be damaged.

Hereinafter, preferred aspects of the present invention will be described. However, the scope of the present invention is not limited to the following preferred aspect examples.

In the working aerial vehicle according to the present invention, as one aspect, it is preferable that the work unit may be configured to eject work material to the field as the work.

According to this configuration, since a hole is formed in the field, it is easy to realize a state suitable for receiving the supply of the supplied material.

In the working aerial vehicle according to the present invention, as one aspect, it is preferable that the supply unit may be configured to eject the supplied material to the field.

According to this configuration, the reliability in supplying the supplied material to the field is improved.

In the working aerial vehicle according to the present invention, as one aspect, it is preferable that the work unit may be configured to eject a work material to the field as the work, the supply unit may be configured to eject the supplied material to the field, and a speed at which the work unit ejects the work material may be higher than a speed at which the supply unit ejects the supplied material.

According to this configuration, since a hole is formed in the field, it is easy to realize a state suitable for receiving the supply of the supplied material. In addition, it is easy to reliably form the hole.

In the working aerial vehicle according to the present invention, as one aspect, it is preferable that the work unit may be configured to eject a work material to the field as the work, the supply unit may be configured to eject the supplied material to the field, and the work material may be harder than the supplied material.

According to this configuration, since a hole is formed in the field, it is easy to realize a state suitable for receiving the supply of the supplied material. In addition, it is easy to reliably form the hole.

In the working aerial vehicle according to the present invention, as one aspect, it is preferable that the work unit may be configured to eject a work material to the field as the work, the supply unit may be configured to eject the supplied material to the field, and an equivalent circle diameter of the work material may be larger than an equivalent circle diameter of the supplied material.

According to this configuration, since a hole is formed in the field, it is easy to realize a state suitable for receiving the supply of the supplied material. In addition, it is easy to reliably form the hole.

In the working aerial vehicle according to the present invention, as one aspect, it is preferable that the work unit is configured to eject a work material to the field as the work, and the working aerial vehicle may further include a material outlet common to the work material and the supplied material.

According to this configuration, since the work material and the supplied material can be supplied from the same material outlet, it is easy to supply the two materials to the same place.

In the working aerial vehicle according to the present invention, as one aspect, it is preferable that the work unit may be configured to eject a work material to the field to form a hole as the work, and output of the work unit is adjusted based on a depth of the hole formed by the work unit.

According to this configuration, since a hole is formed in the field, it is easy to realize a state suitable for receiving the supply of the supplied material. In addition, it is easy to appropriately adjust the depth of the formed hole.

As one aspect, it is preferable that the working aerial vehicle according to the present invention may further include a sensor configured to specify the depth of the hole and adjust the output of the work unit based on a detection value of the sensor.

According to this configuration, it is easy to appropriately adjust the depth of the formed hole.

In the working aerial vehicle according to the present invention, as one aspect, it is preferable that the output of the work unit may be adjusted based on the depth of the hole which is manually input.

According to this configuration, it is easy to appropriately adjust the depth of the formed hole.

As one aspect, it is preferable that the working aerial vehicle according to the present invention may further include a post-work unit configured to perform work on the supplied material supplied to the field.

According to this configuration, since the work can be further added to the supplied material, it is easy to prepare an environment in which the purpose of supplying the supplied material is easily realized, such as preventing the supplied material from being lost due to birds, beasts, wind, rain, or the like.

In the working aerial vehicle according to the present invention, as one aspect, it is preferable that the post-work unit may be configured to eject a covering material to the field, and the supplied material may be covered by the covering material.

According to this configuration, the supplied material is easily covered.

In the working aerial vehicle according to the present invention, as one aspect, it is preferable that an equivalent circle diameter of the covering material may be larger than an equivalent circle diameter of the supplied material.

According to this configuration, the supplied material is easily covered.

As one aspect, it is preferable that the working aerial vehicle according to the present invention may further include a material outlet common to the supplied material and the covering material.

According to this configuration, since the supply of the supplied material and the supply of the covering material can be performed from the same material outlet, it is easy to supply the two materials to the same place.

In the working method according to the present invention, as one aspect, it is preferable that the working aerial vehicle that performs the work on the field and the working aerial vehicle that supplies the supplied material may be the same.

According to this configuration, it is easy to supply the work material and the supplied material to the same place.

In the working method according to the present invention, as one aspect, it is preferable that the working aerial vehicle that performs the work on the field and the working aerial vehicle that supplies the supplied material may be different from each other.

According to this configuration, it is easy to simplify the configuration of each working aerial vehicle.

Further features and advantages of the present invention will be apparent from the following exemplary and non-limited description of embodiments with reference to the accompanying drawings.

### Brief Description of Drawings

Fig. 1 is a schematic diagram of a working aerial vehicle according to an embodiment;
Fig. 2 is a functional configuration diagram of the working aerial vehicle according to the embodiment;
Fig. 3 is a schematic diagram illustrating a specific aspect of a first supply step according to the embodiment;
Fig. 4 is a schematic diagram illustrating a specific aspect of a second supply step according to the embodiment;
Fig. 5 is a schematic diagram illustrating a specific aspect of a covering step according to the embodiment; and
Fig. 6 is a schematic diagram illustrating a state in which a working method according to the embodiment is completed.

### Description of Embodiments

An embodiment of a working aerial vehicle and a working method according to the present invention will be described with reference to the drawings. In the following, an example in which the working aerial vehicle according to the present invention is applied to a working aerial vehicle 1 that performs seeding will be described.

### [Configuration of working aerial vehicle]

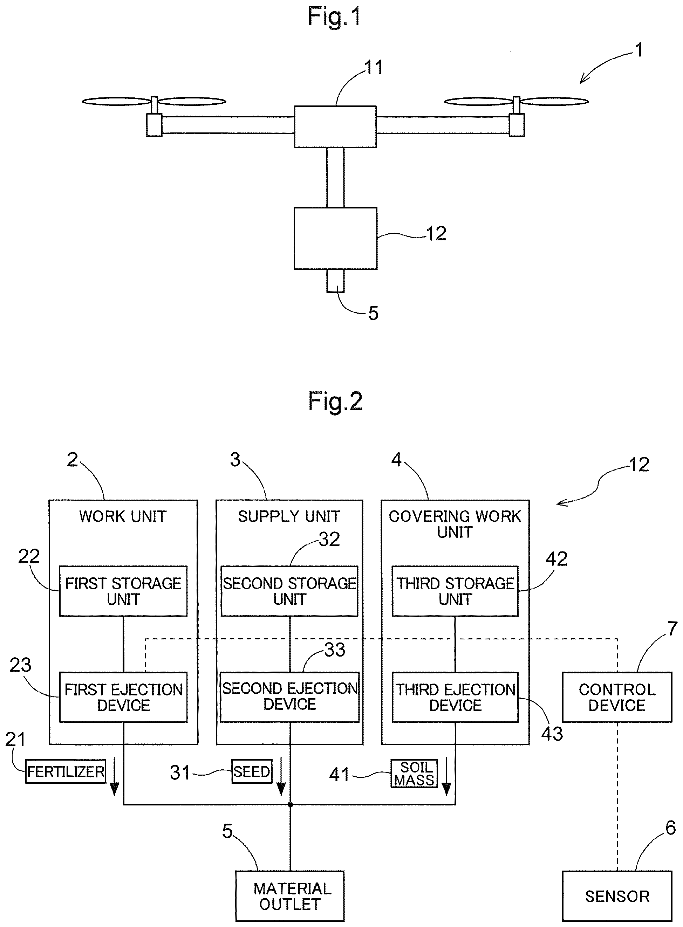

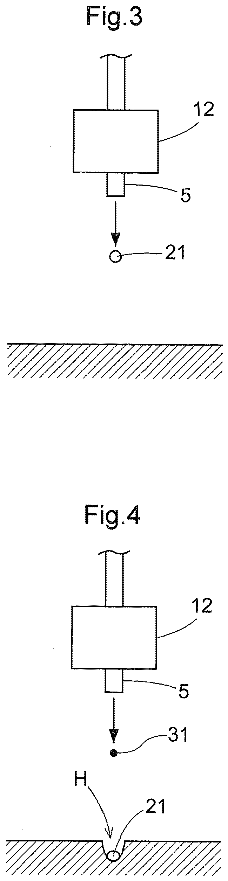

The working aerial vehicle 1 according to the present embodiment includes an aerial vehicle 11 and a work apparatus 12, and the work apparatus 12 has a work unit 2, a supply unit 3, a covering work unit 4, a material outlet 5, a sensor 6, and a control device 7 (Figs. 1 and 2). The working aerial vehicle 1 is generally a device that performs the work of forming a hole H in a field, sowing a seed 31 (an example of a supplied material) in the hole H, and covering the seed 31 (Figs. 3 to 6).

The work unit 2 is a unit that ejects a fertilizer 21 (an example of a work material) to a field to form the hole H in the field, and has a first storage unit 22 that stores the fertilizer 21 and a first ejection device 23 that ejects the fertilizer 21. Forming the hole H in the field is an example of the work for bringing the field into a state suitable for receiving the supply of the seed 31. Other examples of such work will be described below.

The fertilizer 21 may have a form that satisfies requirements such as a size, hardness, and weight that can form the hole H in a case where the fertilizer 21 is ejected to the field. In addition, the fertilizer 21 may be subjected to a treatment such as molding, curing, or encapsulation such that the hole H is easily formed. Typically, the equivalent circle diameter of the fertilizer 21 is larger than the equivalent circle diameter of the seed 31 ejected from the supply unit 3. In addition, a configuration in which the fertilizer 21 is harder than the seed 31 is also a preferable configuration from the viewpoint of easily forming the hole H. However, it is acceptable that the fertilizer 21 is not harder than the seed 31 as long as the hole H can be formed. For example, in a case where the fertilizer 21 has a hardness such that the fertilizer 21 is pulverized in a case where the hole H is formed in the field, a state in which the pulverized fertilizer 21 is spread on the hole H is realized, and it is possible to expect that the pulverized fertilizer 21 acts as a cushioning material that protects the seed 31 ejected into the hole H.

The first storage unit 22 is a container-shaped member that stores the fertilizer 21 and supplies the fertilizer 21 to the first ejection device 23. The configuration of the first storage unit 22 is appropriately selected according to the properties, shape, and the like of the fertilizer 21 to be used.

The first ejection device 23 is a device that ejects the fertilizer 21 toward the field. The first ejection device 23 needs to give sufficient kinetic energy to the fertilizer 21 through the driving thereof so that the ejected fertilizer 21 can form the hole H in the field, and the mechanism, output, and the like of the first ejection device 23 are selected to be capable of realizing this function. Examples of a specific mounting form of the first ejection device 23 include a mechanical device that ejects the fertilizer 21 by a gear rotating at a high speed, a pressurization type device that ejects the fertilizer 21 using a compressed fluid (for example, compressed air), and the like.

The supply unit 3 is a device that ejects the seed 31 (an example of the supplied material) into the hole H formed by the work unit 2, and has a second storage unit 32 that stores the seed 31 and a second ejection device 33 that ejects the seed 31.

As the seed 31, a seed of an agricultural crop may be used as it is, or a seed obtained by performing some processing on a seed collected from an agricultural crop may be used. The processing performed here includes, in addition to processing in the related art, such as the processing of adding a coating for preventing seeds from being eaten by birds or beasts or the processing in which seeds are accompanied by chemicals for preventing diseases of crops or fertilizers for promoting germination, unique processing for facilitating the seeding using the working aerial vehicle 1 according to the present embodiment, such as the processing of adding a coating for preventing the seed 31 from being damaged by an impact due to ejection and the processing of adding a coating (spherical shape, cylindrical shape, or the like) for enhancing the directionality of the ejected seed 31. In addition, the seed 31 in which a plurality of types of processing is performed simultaneously or sequentially may be used.

The second storage unit 32 is a container-shaped member that stores the seed 31 and supplies the seed 31 to the first ejection device 23. The configuration of the second storage unit 32 is appropriately selected according to the properties, shape, and the like of the seed 31 to be used. The processing on the seed 31 may be performed in the second storage unit 32.

The second ejection device 33 is a device that ejects the seed 31 toward the field. Examples of a specific mounting form of the second ejection device 33 include a mechanical device, a pneumatic device, and the like, as in the first ejection device 23. However, while the first ejection device 23 needs to give sufficient kinetic energy to the fertilizer 21 so that the hole H can be formed in the field, it is preferable that the second ejection device 33 avoids an excessive ejection speed so that the ejected seed 31 is not damaged. Therefore, typically, the speed at which the first ejection device 23 (work unit 2) ejects the fertilizer 21 is higher than the speed at which the second ejection device 33 (supply unit 3) ejects the seed 31.

The covering work unit 4 (an example of a post-work unit) is a unit that performs work of covering the seed 31 supplied to the hole H. In the present embodiment, the covering work unit 4 is configured to eject a soil mass 41 (which is an example of a covering material) into the hole H, and covers the seed 31 with the soil mass 41 to cover the seed 31. The covering work unit 4 has a third storage unit 42 that stores the soil mass 41 and a third ejection device 43 that ejects the soil mass 41.

The soil mass 41 is a mass of soil supplied to the field for the purpose of covering the seed 31 supplied to the hole H. Therefore, the shape, size, and the like of the soil mass 41 can be determined in consideration of the size of the hole H to be formed by the work unit 2, the size of the seed 31, and the like. Typically, the equivalent circle diameter of the soil mass 41 is larger than the equivalent circle diameter of the fertilizer 21 and the equivalent circle diameter of the seed 31. In addition, the properties of the soil forming the soil mass 41 can be determined in consideration of the properties of the soil of the field, the properties of the soil suitable for the growth of the seed 31, and the like.

The third storage unit 42 is a container-shaped member that stores the soil mass 41 and supplies the soil mass 41 to the third ejection device 43. The configuration of the third storage unit 42 is appropriately selected according to the shape and the like of the soil mass 41 to be used. Instead of the configuration in which the soil mass 41 is stored, a configuration in which soil before being molded into the soil mass 41 is stored in the third storage unit 42 and the soil mass 41 is molded in the third storage unit 42 may be adopted.

The third ejection device 43 is a device that ejects the soil mass 41 toward the field. Examples of a specific mounting form of the third ejection device 43 include a mechanical device, a pressurization type device, and the like, as in the first ejection device 23 and the second ejection device 33.

The material outlet 5 is an outlet common to the fertilizer 21, the seed 31, and the soil mass 41. Therefore, the material outlet 5 is connected to the first ejection device 23, the second ejection device 33, and the third ejection device 43. Since the material outlet 5 functions as an outlet in a case where the fertilizer 21, the seed 31, and the soil mass 41 is ejected to the field, the material outlet 5 is open toward the field, that is, downward.

The sensor 6 is a sensor that specifies the depth of the hole H formed in the field. Examples of a specific mounting form of the sensor 6 include an optical, millimeter-wave, or ultrasonic distance-measuring sensor, and an image identification device including an imaging device, and the like. The depth (detection value) of the hole H specified by the sensor 6 is output to the control device 7.

The control device 7 is a device that controls the operation of a drive unit of the work apparatus 12. Here, the drive unit corresponds to the first ejection device 23, the second ejection device 33, and the third ejection device 43. The control device 7 may have a general configuration as a control device, which includes a calculation device, a storage device, a communication device, and the like.

The control device 7 controls the output of the first ejection device 23 based on the depth of the hole H specified by the sensor 6. For example, the output of the first ejection device 23 is subjected to feedback control such that the depth of the hole H has a desired value set in advance, based on statistics of the depths of the plurality of holes H sequentially formed. The desired value of the depth of the hole H is determined based on, for example, the type of crop of the seed 31 and can be input to the control device 7 in advance.

In addition, even in a case where the field is mentioned in one word, the properties of the soil may be locally different. Therefore, even in a case where the first ejection device 23 is operated with the same output, the depth of the hole H to be formed may be different depending on locations. Therefore, data related to the hardness of the soil at each point of the field may be input to the control device 7 in advance, and the output of the first ejection device 23 may be adjusted for each point based on the data. In addition, in a case where the depth of the hole H measured by the sensor 6 is shallower than expected, the fertilizer 21 may be ejected from the first ejection device 23 again at the same spot.

### [Working Method]

Subsequently, an embodiment of a working method for performing seeding of the seed 31 using the working aerial vehicle 1 will be described. The working method according to the present embodiment includes a first supply step, a second supply step, and a covering step in this order.

The first supply step is a step of forming the hole H in the field by ejecting the fertilizer 21 from the working aerial vehicle 1 to the field (Fig. 3). This step is performed by the work unit 2. The operation of ejecting the fertilizer 21 is an example of the operation of supplying the work material.

The second supply step is a step of ejecting the seed 31 from the working aerial vehicle 1 to the hole H (Fig. 4). That is, it can be said that the step is a step in which seeding is performed. This step is performed by the supply unit 3. The operation of ejecting the seed 31 is an example of the operation of supplying the supplied material.

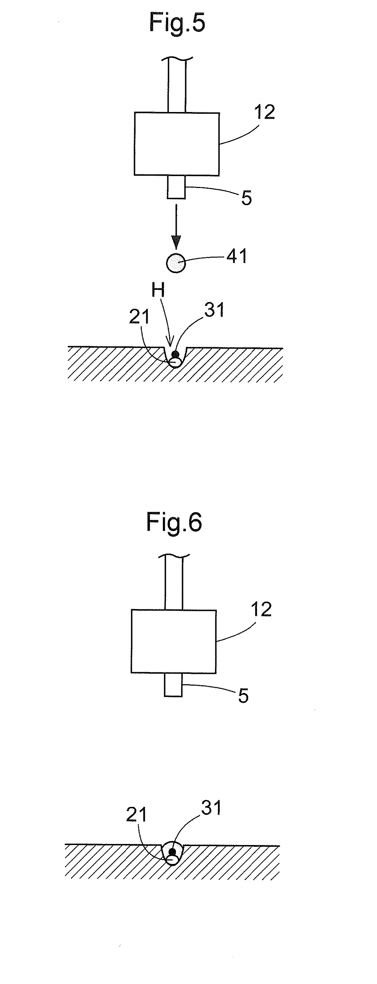

The covering step is a step of ejecting the soil mass 41 from the working aerial vehicle 1 into the hole H to cover the seed 31 (Figs. 5 and 6). This step is performed by the covering work unit 4.

The operations of the work unit 2 (first ejection device 23), the supply unit 3 (second ejection device 33), and the covering work unit 4 (third ejection device 43) in the above-described three steps are controlled by the control device 7. In addition to the above-described feedback control of adjusting the depth of the hole H, the timing at which each of the first supply step, the second supply step, and the covering step is performed is also controlled. In this case, communication may be established with a control device (not illustrated) on the aerial vehicle 11 side, and the work apparatus 12 may be controlled in conjunction with the operation of a flying device (a propeller, a motor, or the like; not designated by a reference numeral) of the aerial vehicle 11.

### [Other Embodiments]

Finally, other embodiments of the working aerial vehicle and the working method according to the present invention will be described. The configurations disclosed in each of the following embodiments can also be applied in combination with the configurations disclosed in other embodiments as long as no contradiction occurs.

In the above-described embodiment, a configuration in which the work unit 2 supplies the fertilizer 21 to the field and forms the hole H has been described as an example. However, in the present invention, the aspect in which the work unit brings the field into a state suitable for receiving the supply of the supplied material is not limited to the aspect in which the work material is ejected to form the hole. The state of the field suitable for receiving the supply of the supplied material may be, for example, an aspect in which the field is leveled, the field is plowed, the soil is softened, the soil contains moisture, a ditch is dug, a hole is formed, harmful insects are exterminated, and a mark for a position where the supplied material is to be ejected is installed, and a work unit having a configuration capable of realizing the selected state is adopted. In addition, the work unit may one that directly acts on a field, such as an implement of a tractor, in addition to one that indirectly acts on a field, such as ejecting the work material. In addition, in a case where the work unit has an aspect in which the work material is ejected, the work material may be soil masses that can form holes, soil masses that can serve as a cushion for a supplied material, chemicals that has chemical efficacy for the supplied material, liquids that soften the soil of the field, containers that blend well with soil such as biodegradable containers, and the like, in addition to fertilizers. In addition, the work material may be connected to the work unit and may be pulled back to the work unit after acting on the field.

In the above-described embodiment, the configuration in which the supply unit 3 supplies the seed 31 to the hole H of the field has been described as an example. However, in the present invention, the supplied material supplied from the supply unit to the field may be fertilizers, chemicals, seedlings, pot seedlings, or the like, in addition to the seed. In addition, the method of supplying the supplied material to the field by the supply unit is not limited to the method of ejecting the supplied material.

In the above-described embodiment, the configuration in which the covering work unit 4 ejects the soil mass 41 into the hole H of the field to cover the seed 31 has been described as an example. However, in the present invention, the work performed by the post-work unit is not limited to the covering of the supplied material. The work performed by the post-work unit is typically work for creating a situation in which the purpose of supplying the supplied material is easily achieved, and may take the aspect of, for example, covering the supplied material with soil to cover the supplied material, forming a groove around the supplied material to drain water, pushing the supplied material deeper into the ground, leveling the area around a point where the supplied material is supplied, and the like. Then, an aspect in which the selected work can be realized is selected as the aspect of the post-work unit. In addition, the post-work unit may one that directly acts on a field, such as an implement of a tractor, in addition to one that indirectly acts on a field, such as ejecting some kind of material.

In a case where the post-work unit covers the supplied material, the method of covering the supplied material is not particularly limited. For example, even in a case where the covering material is ejected as in the above-described embodiment, the covering material may be water, fertilizers, chemicals (particularly, those having significant effects when supplied above the supplied material), materials that blend well with soil, such as biodegradable materials, or materials (such as rubber-like materials or jelly-like materials) that can permeate or dissolve in soil, and are not limited to soil masses. In addition, a method of moving soil around the supplied material to cover the supplied material may be adopted instead of or in addition to the ejection of the covering material. In any case, the post-work unit having a configuration suitable for the selected method can be mounted.

In the above-described embodiment, a configuration in which the work unit 2, the supply unit 3, and the covering work unit 4 share the material outlet 5 has been described as an example. However, in the present invention, in a case where some or all of the work unit, the supply unit, and the optionally provided post-work unit eject any material, each of the work unit, the supply unit, and the post-work unit may have an independent material outlet.

In the above-described embodiment, a configuration in which the depth of the hole H is controlled by controlling the output of the first ejection device 23 based on the depth of the hole H specified by the sensor 6 has been described as an example. However, in a case where a hole is formed in the present invention, a desired depth of the hole may be manually input, and the output of the work unit may be controlled based on the input depth.

In the above-described embodiment, a configuration in which the working aerial vehicle 1 includes the aerial vehicle 11 and the work apparatus 12, and the work apparatus 12 has individual functional units such as the work unit 2, the supply unit 3, and the covering work unit 4 has been described as an example. However, the working aerial vehicle according to the present invention may be an airframe in which an aerial vehicle portion having a flying function, the work unit, the supply unit, and the optionally provided post-work unit are integrally provided.

In the above-described embodiment, a configuration in which one working aerial vehicle 1 includes the aerial vehicle 11 and the work apparatus 12 and the work apparatus 12 has individual functional units such as the work unit 2, the supply unit 3, and the covering work unit 4 has been described as an example. However, the work unit and the supply unit in the present invention may be provided to be distributed in a plurality of working aerial vehicles. That is, a working aerial vehicle group including a first working aerial vehicle including a work unit configured to perform work for bringing a field into a state suitable for receiving supply of a supplied material, and a second working aerial vehicle including a supply unit configured to supply the supplied material to the field on which the work is performed is also one aspect of the present invention. In addition, in a case where the post-work unit is further provided in this aspect of the present invention, the post-work unit may be provided in the second working aerial vehicle, may be provided in a working aerial vehicle different from the first working aerial vehicle and the second working aerial vehicle, or may be provided in a working aerial vehicle that travels on the ground, such as a tractor.

In the above-described embodiment, although the working aerial vehicle 1 has been described as an example, a configuration may be adopted in which a work machine including a work unit configured to perform work for bringing a field into a state suitable for receiving supply of a supplied material and a supply unit configured to supply the supplied material to the field on which the work has been performed may be configured to travel on the ground. In this case as well, a configuration in which the field is brought into a state suitable for receiving the supply of the supplied material by ejecting the material, as exemplified in the above-described embodiment, can be appropriately adopted.

Regarding other configurations, it should be understood that the embodiments disclosed in the present specification are merely examples in all points and that the scope of the present invention is not limited thereto. Those skilled in the art can easily understand that appropriate modifications can be made without departing from the spirit of the present invention. Therefore, other embodiments modified without departing from the spirit of the present invention are also naturally included in the scope of the present invention.

### Industrial Applicability

The present invention can be used for various kinds of work (for example, seeding work or the like) performed in a field by human labor or by using a work machine.

### Description of Reference Numerals

1: working aerial vehicle
11: aerial vehicle
12: work apparatus
2: work unit
21: fertilizer
22: first storage unit
23: first ejection device
3: supply unit
31: seed
32: second storage unit
33: second ejection device
4: covering work unit
41: soil mass
42: third storage unit
43: third ejection device
5: material outlet
6: sensor
7: control device
H: hole

## Claims

1. A working aerial vehicle, comprising:
a work unit configured to perform work for bringing a field into a state suitable for receiving supply of a supplied material; and
a supply unit configured to supply the supplied material to the field on which the work is performed.

2. The working aerial vehicle according to claim 1,
wherein the work unit is configured to eject a work material to the field as the work.

3. The working aerial vehicle according to claim 1,
wherein the supply unit is configured to eject the supplied material to the field.

4. The working aerial vehicle according to claim 1,
wherein the work unit is configured to eject a work material to the field as the work,
the supply unit is configured to eject the supplied material to the field, and
a speed at which the work unit ejects the work material is higher than a speed at which the supply unit ejects the supplied material.

5. The working aerial vehicle according to claim 1,
wherein the work unit is configured to eject a work material to the field as the work,
the supply unit is configured to eject the supplied material to the field, and
the work material is harder than the supplied material.

6. The working aerial vehicle according to claim 1,
wherein the work unit is configured to eject a work material to the field as the work,
the supply unit is configured to eject the supplied material to the field, and
an equivalent circle diameter of the work material is larger than an equivalent circle diameter of the supplied material.

7. The working aerial vehicle according to claim 1,
wherein the work unit is configured to eject a work material to the field as the work,
the working aerial vehicle further comprises a material outlet common to the work material and the supplied material.

8. The working aerial vehicle according to claim 1,
wherein the work unit is configured to eject a work material to the field to form a hole as the work, and
output of the work unit is adjusted based on a depth of the hole formed by the work unit.

9. The working aerial vehicle according to claim 8, further comprising:
a sensor configured to specify the depth of the hole,
wherein the output of the work unit is adjusted based on a detection value of the sensor.

10. The working aerial vehicle according to claim 8,
wherein the output of the work unit is adjusted based on the depth of the hole which is manually input.

11. The working aerial vehicle according to claim 1, further comprising:
a post-work unit configured to perform work on the supplied material supplied to the field.

12. The working aerial vehicle according to claim 11,
wherein the post-work unit is configured to eject a covering material to the field, and
the supplied material is covered by the covering material.

13. The working aerial vehicle according to claim 12,
wherein an equivalent circle diameter of the covering material is larger than an equivalent circle diameter of the supplied material.

14. The working aerial vehicle according to claim 12, further comprising:
a material outlet common to the supplied material and the covering material.

15. A working aerial vehicle group, comprising:
a first working aerial vehicle including a work unit configured to perform work for bringing a field into a state suitable for receiving supply of a supplied material; and
a second working aerial vehicle including a supply unit configured to supply the supplied material to the field on which the work is performed.

16. A working method, comprising:
a first step of performing, by a working aerial vehicle, work for bringing a field into a state suitable for receiving supply of a supplied material; and
a second step of supplying, by a working aerial vehicle, the supplied material to the field on which the work is performed.

17. The working method according to claim 16, wherein the working aerial vehicle that performs the work on the field and the working aerial vehicle that supplies the supplied material are the same.

18. The working method according to claim 16, wherein the working aerial vehicle that performs the work on the field and the working aerial vehicle that supplies the supplied material are different from each other.
